## Europäisches Patentamt

## European Patent Office

## Office européen des brevets

(11) Publication number: **0 035 271**
**B1**

(12) **EUROPEAN PATENT SPECIFICATION**

(45) Date of publication of patent specification: **08.05.85**

(21) Application number: **81101515.5**

(22) Date of filing: **03.03.81**

(51) Int. Cl.⁴: **H 01 B 3/00**, H 01 B 1/22, H 02 G 15/00

(54) **Elastomeric composition for providing electrical stress control.**

(30) Priority: **03.03.80 US 126405**
**04.03.80 DE 3008264**

(43) Date of publication of application:
**09.09.81 Bulletin 81/36**

(45) Publication of the grant of the patent:
**08.05.85 Bulletin 85/19**

(84) Designated Contracting States:
**BE CH DE FR GB IT LI NL SE**

(56) References cited:
**CH-A- 587 542**
**US-A-3 349 164**
**US-A-3 412 043**
**US-A-3 515 798**
**US-A-3 950 604**

(73) Proprietor: **MINNESOTA MINING AND**
**MANUFACTURING COMPANY**
**3M Center, P.O. Box 33427**
**St. Paul, MN 55133 (US)**

(72) Inventor: **Nelson, Paul Nick**
**2501 Hudson Road P.O. Box 33427**
**St. Paul Minnesota 55133 (US)**
Inventor: **Kehr, Dieter**
**2501 Hudson Road P.O. Box 33427**
**St. Paul Minnesota 55133 (US)**
Inventor: **Viebranz, Manfred**
**2501 Hudson Road P.O. Box 33427**
**St. Paul Minnesota 55133 (US)**

(74) Representative: **Baillie, Iain Cameron et al**
**c/o Ladas & Parry Isartorplatz 5**
**D-8000 München 2 (DE)**

Courier Press, Leamington Spa, England.

## 0 035 271

**Description**

Background of the invention

The invention relates to high permittivity elastomeric compositions for favorably influencing electric fields associated with the splicing and termination of high voltage power cables. The composition comprises a non-polar polymeric base material, a substantial amount of very fine polarizable particles capable of increasing the permittivity of the composition, carbon black, an effective amount of platelet-shaped conductive particles, and an inorganic dielectric filler. Typically, the composition is molded or extruded in the form of tubes for ultimate use in the splicing and terminating application, and, together with the cable insulating materials which have low permittivity, act upon electrical fields in the sense of refraction.

Compositions of the general type indicated above, i.e., wherein high permittivity is sought, are known, for example, from U.S. Patent Nos. 3 258 522 and 3 287 489 along with British Patent No. 1 394 272 all of which disclose the use of carbon black in the development of high permittivity elastomeric compositions. Further, the use of ceramic or high permittivity inorganic fillers in compositions is disclosed in U.S. Patent Nos. 3 585 274; 3 673 305; 3 816 639; 3 823 334; 3 828 115; and 4 053 702. The combination of carbon black and planarly oriented conductive platelets in highly polar organic polymer bases, in the form of thin films, has been shown to provide high permittivity with high dielectric strength, as is disclosed in U.S. Patent No. 3 349 164. According to this patent, however, polar organic polymers are used, e.g. butadiene-acrylonitrile copolymer compounded with aluminum flake and about 27 per cent carbon black. Other known configurations include multi-layer heat shrink products which consist of a low permittivity heat shrinkable polymeric cover which has been internally coated with an elastomeric layer which provides high permittivity principally through the incorporation of silicone carbide particles, although conducting particulate fillers may also be included: see for example U.S. Patent No. 3,950,604. Combinations of electrically conducting and insulating flakes are also known, as is disclosed in U.S. Patent No. 4,234,439.

The usefulness of inorganic particulate materials such as barium titanate and titanium dioxide as high permittivity components for compositions having or exhibiting a refractive stress controlling action has been known for a long time, but the desirable elastomeric properties were overlooked; see for example U.S. Patent Nos. 3,673,305 and 3,823,334. In this connection, it has been found that when inorganic materials of very high permittivity are utilized, e.g., barium titanate having a permittivity of approximately 6,000 to 10,000, the permittivity of the elastomeric composition cannot be increased sufficiently if the composition is to retain the desirable elastomeric properties of the base material. In other words, in order to provide satisfactory permittivity, the proportion of inorganic material becomes so high as to preclude the manufacture of practical stress control elements having adequate elastomeric characteristics for providing gap-free contact with electric power cables.

This invention provides high permittivity stress control for high voltage power cable terminations with greatly improved impulse strength allowing the utilization of compact and more economical tubular designs. Furthermore, it provides sufficient mechanical strength and high elastic memory enabling the use of PST (pre-stretched tube, as hereinafter defined) delivery during application.

Furthermore, there are other stress controlling devices which contain materials mainly acting in a resistive manner. Such materials have the inherent disadvantage that an increase in resistivity under overload conditions may result in excessive heating and accelerated aging of the material, which can ultimately lead to electrical breakdown. Conversely, the compositions of this invention act, together with the cable insulating materials of low permittivity, upon electrical fields in the sense of refraction.

The application of tubular high permittivity stress control elements requires less knowledge and skill than the application of other stress control devices, such as the mounting of conductive stress control cones, the wrapping of stress control tapes, the molding of flowable or shapeable masses having stress controlling properties which subsequently harden at the site of installation, etc. Tubular termination designs also provide favorable economics to both the supplier and user, as less material is utilized, ultimate diameters are smaller, and creepage lengths between conductor and ground are shortened, thereby reducing space requirements at the installation site.

Summary of the invention

In accordance with the invention there is provided an elastomeric composition providing electrical stress control and comprising a compounded non-polar elastomer, carbon black, from 0.8 to 7.0 volume per cent of platelet-shaped conductive particles said composition being characterized in that it contains from 2.5 to 25 volume per cent carbon black, from 0 to 8.0 volume per cent of high-permittivity inorganic filler and from 0 to 12.0 volume per cent of platelet-shaped inorganic dielectric filler.

The composition can be conventionally molded or extruded into tubular articles which have utility in the splicing and termination of electric power cables.

The invention also provides an elastomeric/tubular article for use in the splicing and termination of electric power cables, said article comprising a composition according to any of claims 1 to 9.

Detailed description of the invention

The composition of this invention is capable of being extruded or molded into a tubular shape, and, in

2

a preferred embodiment, can also be expanded onto a core for subsequent application. Such a device is typically designated a "PST", which stands for pre-stretched tube. The core can be external, i.e. on the outside of the tube, or can be inside the tube, such as is taught in U.S. patent No. 3,515,798, incorporated herein by reference. Preferably, the core is internal and is a one-piece rigid spiral core having interconnected adjacent coils in a closed helix configuration.

While this patent describes the PST technique, and the use therein of natural and synthetic rubber compounded with carbon black and other additives such as those disclosed in U.S. Patent 3 349 164, it does not address the problems of polymer compounding, particularly the problem of using high proportions of inorganic additives, as hereinbefore described.

By utilizing this PST technique, a completely insulated termination can be applied in a one step operation. The application consists essentially of a high permittivity tube covered by an arc/track and weather resistant insulation which is applied to the prepared cable simultaneously with core removal. This can provide a completely insulated termination in which the electric field stresses are controlled effectively by the high permittivity tube through the refraction of electric flux lines at the interface between the cable insulation and high permittivity tube. Another characteristic of a PST which more directly pertains to the method in which it is applied, is cold shrink. This implicitly means that such devices may be applied to cables without the necessity of a heat source, as is conventionally used with heat shrink tubing. Rather, the characteristics of shrinking behaviour are a function of superior elastic memory characteristics of the composition.

Of course, the composition can be formulated so as to be utilized in accordance with conventional slide-on techniques.

The elastomeric composition should contain from about 2.5 to about 25% by volume carbon black. The carbon black may consist of essentially any commercial grade, from the large particulate size thermal types to the fine reinforcing furnace grades, including the materials termed conductive carbon black. A preferred carbon black, especially for PST applications, is a coarse furnace grade (i.e. having an average particle diameter of from about 40 to about 100 nanometers), and with this material, from about 10 to about 20 volume percent of the composition is preferred. Carbon black is necessary to achieve an effective refraction of electric flux lines in the terminating device, and yet allow maintenance of a desired level of elasticity. Typically, the larger the particle size of the carbon black and the lower the structure thereof, the greater the volume fraction thereof is necessary.

In addition to carbon black, it has been determined that from about 0.8 to about 7 percent by volume of the elastomeric composition must be comprised of platelet-shaped conductive particles, typically metallic flakes. Such flakes must be sufficiently fine to disperse readily and uniformly in the elastomeric base material and not contribute to excessive gas evolution during the vulcanization process (if such is necessary), nor detract significantly from the physical properties of the resultant elastomeric tube.

Aluminium platelets are most preferred, and other metallic particles, such as copper platelets can also be utilized. For a slide-on application, it has been found that the concentration can be from about 0.8 to about 7.0 percent by volume, while requirements for the PST range from about 0.8 to about 3.0 percent by volume, with the preferred aluminum platelets, from about 1.2 to about 1.8 percent thereof by volume are preferred.

It has been determined that the minimum amount of such platelets must be present in order to achieve desired impulse strength performance, which refers to the ability of the termination to withstand the potential damaging effects caused by lightning strike surges or other transient surges on the high voltage electrical line.

While not absolutely essential to functionality of the invention, it has been determined that the incorporation of high permittivity inorganic fillers can provide desirable results in the composition. Examples of such materials include barium titanate, titanium dioxide, strontium titanate, etc. The use of such materials can provide superior permittivity stability over a range of electrical stresses and can assist in the generation of lower electrical loss for a given permittivity level. Up to about 8.0 percent by volume of these fillers can be included, with less than about 5.0 percent being preferred.

In addition, again while not essential to functionality, the incorporation of platelet-shaped inorganic fillers having dielectric characteristics can provide an improvement in the electrical strength of the invention. For example, the use of mica having particle diameters of from about 8 to about 40 micrometers and thicknesses of from about 0.5 to about 1.0 micrometers has discernably increased the dielectric strength of the elastomer composition, which in turn relates to superior AC breakdown strength of the electrical termination. This component can be present at up to about 12 volume percent, with less than about 5 volume percent being preferred.

The balance of the composition comprises the compounded elastomeric component thereof. By the term compounded is meant normal conventional operations in which ingredients are added to provide the required processing behavior and physical properties of the elastomeric device. Processing could entail open mill or internal mixing, extrusion, steam autoclave or continuous vulcanization or molding techniques. In keeping with conventional preparation of such elastomeric materials, typical process aids, process oils, coupling agents, and vulcanizing agents (if necessary) are included in the compounded elastomeric component.

Elastomers such as silicones, styrene-butadiene rubber (SBR), polybutadiene rubber (BR), natural or

3

**0 035 271**

synthetic polyisoprenes, ethylene-propylene-diene copolymers (EPDM) and ethylene-propylene copolymers (EPM) can be utilized. For the preparation of a PST, it has been determined that only EPDM and EPM elastomers provided the necessary physical characteristics for this utility.

As aforementioned, one of the key characteristics for a termination is the impulse strength, which is tested by means of the Basic Impulse Insulation Level (BIL). BIL is defined as the shock wave (1.2×50 microseconds) and a minimum voltage level, depending on the cable rating, that the termination must endure without electrical flashover or breakdown. (IEEE Std. 4-1978). The desired performance level for a 20 kV termination having a 330 millimeter cutback (i.e., the distance from the exposed conductor to the cable shield or ground potential) is as follows:

| | |
|---|---|
| Maximum Impulse Withstand (Positive and Negative) | Greater than 150 kV |
| 100 Percent Impulse Flashover Level (Positive and Negative) | Greater than 160 kV |
| Average AC Flashover | Greater than 80 kV |
| AC Breakdown Strength | Greater than 100 kV |

The AC breakdown strength should exceed the AC flashover level by at least 20 kV for the purpose of insulation coordination of the power line and to provide a margin of safety for the terminating device.

In addition to the foregoing electrical criteria for tubular stress control termination devices, if the device is in PST form, adequate physical performance criteria thereof are as follows:

| | |
|---|---|
| ASTM D-412 100 Percent Modulus | Less than 300 PSI (2.07 MPa) |
| ASTM D-412 Ultimate Tensile Strength | Greater than 1000 PSI (6.90 MPa) |
| ASTM D-412 Ultimate Elongation | Greater than 400% |
| ASTM D-624 Die C Tear Strength | Greater than 150 PLI (26.3 kN/m) |
| Permanent Set | Less than 30% |

Permanent set is a measure of the elastic memory of a cured elastomer. In the case of a pre-stretched article, excellent elastic memory will typically allow for coverage of a broad range of cable or workpiece diameters with a minimum number of sizes of pre-stretched articles. For adequate sealability and optimum product versatility, the permanent set should not exceed about 30 per cent. To ascertain permanent set, a sample is subjected to a preselected strain at a specified temperature for a period of time, and released, whereupon the distance (diameter, length, etc.) that is unrecovered can be measured. The conditions herein involve stretching the specimen 100 percent for 22 hours at 100°C., following which the samples are allowed to equilibrate for one hour at room temperature. The samples are then released, and after a 30 minute recovery period, are measured. The following formula is then utilized to calculate permanent set:

$$\text{Percent Permanent Set} = \frac{L_{30}-L_i}{L_s-L_i} \times 100$$

wherein $L_i$ is the original length between benchmarks, typically 2.54 cm (one inch); $L_s$ is the stretched length between benchmarks, e.g., at 100 per cent stretch, this would be 5.08 cm (two inches); and $L_{30}$ is the length between benchmarks after the 30 minute recovery period.

The invention will now be more specifically defined by the aid of the following non-limiting examples, wherein all parts are by weight unless otherwise specified.

Example 1

An elastomeric material was prepared by utilizing the following composition:

4

**0 035 271**

| | Parts by weight |
|---|---|
| Nordel 1470 (tradename for an ethylene/propylene/diene monomer rubber commercially available from DuPont | 50 |
| Nordel 1440 (tradename for an ethylene/propylene/diene monomer rubber commercially available from DuPont) | 50 |
| Zinc oxide | 5.0 |
| N754 Carbon Black (a coarse grade commercially available from Columbian Chemical) | 74.1 |
| 4232 NEW CT ff Aluminum Flakes (tradename for non-leafing aluminum flakes of 25 micrometer average particle diameter (90 percent through 325 mesh) commercially available from Eckart-Werke) | 8.7 |
| Silene D (tradename for an amorphous silica from Pittsburgh Plate Glass) | 15 |
| Sunpar 2280 (tradename for a paraffinic oil commercially available from the Sun Company) | 30 |
| D-148 (tradename for a processing aid commercially available from Ventron) | 2.5 |
| SR 297 (tradename for 1,3 butylene dimethacrylate commercially available from the Sartomer Company) | 5.0 |
| Silane A-172 (tradename for a vinyl silane coupling agent commercially available from Dow Chemical) | 1.0 |
| Vul-Cup 40KE (tradename for a difunctional peroxide commercially available from Hercules). | 4.2 |

This provides for a concentration in percent by volume of 18.7 for carbon black and 1.5 for the aluminum flakes. (Concentration level is specified in terms of volume percentage because electrical characteristics are dependent on the spacial arrangement of filler particles).

The composition was extruded into high permittivity tubing using a conventional cold feed extruded and vulcanized in a steam autoclave. The tubing was electrically tested using a 20 kV tubular termination design having a 330 millimeter shield cut-back (the distance from the exposed conductor to cable shield or ground potential). Such testing indicated that the tubing could withstand a maximum impulse on the positive side of 176 kV and 192 kV on the negative side; the 100 percent impulse flashover level was 189 kV on the positive side and 204 kV on the negative side; the average AC flashover was found to be 96 kV; and the AC breakdown strength was found to be 125 kV.

As for the physical properties of the tubular sample, same exhibited a 100 per cent modulus of 1.66 MPa (241 PSI); an ultimate tensile strength of 10.02 MPa (1,454 PSI); an ultimate elongation of 643 per cent; a Die C tear strength of 109 Kg/2.54 cm (241 PLI); the permanent set was found to be 16.4 per cent; and the permittivity, i.e., specific inductance capacitance (SIC), measured in the axial direction with 60 per cent radial expansion, was found to be 37.6.

Example 2

An elastomeric composition was prepared as per Example 1 using the following components:

5

**0 035 271**

|  | Parts by weight |
|---|---|
| Nordel 1470 | 50 |
| Nordel 1440 | 50 |
| Zinc Oxide | 5 |
| N754 Carbon Black | 73.1 |
| 4232 CT ff Aluminum Flakes | 7.1 |
| K-Fil 19 (a barium titanate from NL Industries) | 39.2 |
| Silene D | 15 |
| Sunpar 2280 | 30 |
| D-148 | 2.5 |
| SR 297 | 5 |
| Silane A-172 | 1 |
| Vul-Cup 40KE | 4.2 |

|  | % by weight | % by volume |
|---|---|---|
| Carbon Black | 25.9 | 18.0 |
| Aluminum Flakes | 2.5 | 1.2 |
| Barium Titanate | 13.9 | 3.0 |

|  | Pos. | Neg. |
|---|---|---|
| Maximum Impulse Withstand, kV | 185 | 164 |
| 100% Impulse Flashover Level, kV | 198 | 181 |
| Average AC Flashover, kV | 104 | |
| AC Breakdown Strength, kV | 145 | |

| 100% Modulus | 217 PSI (1.50 MPa) |
|---|---|
| Ult. Tensile | 1249 PSI (8.61 MPa) |
| Ult. Elongation | 480% |
| Die C Tear | 182 PLI (31.9 kN/m) |
| Permanent Set | 15.2% |
| Permittivity | 22.0 |

This example illustrates the presence of barium titanate in addition to carbon black and metallic flakes, with maintenance of suitable electrical and physical properties.

Example 3

An elastomeric composition was prepared as per Example 1 using the following components:

**0 035 271**

| | Parts by weight |
|---|---|
| Nordel 1470 | 50 |
| Nordel 1440 | 50 |
| Zinc Oxide | 5 |
| N550 Carbon Black, a coarse grade commercially available from Columbian Chemical | 43.7 |
| 4232 CT ff Aluminum Flakes | 8.0 |

| | Parts by weight |
|---|---|
| 4× Mineralite Mica, from Thompson Hayward Chemical | 20 |
| Sunpar 2280 | 30 |
| D148 | 2 |
| Struktol WB16, a calcium fatty acid salt from Struktol Co. | 2 |
| SR297 | 5 |
| Silane A172 | 1 |
| Vul-Cup 40KE | 4.4 |

| | % by weight | % by volume |
|---|---|---|
| Carbon Black | 19.8 | 12.0 |
| Aluminum Flakes | 3.6 | 1.5 |
| Mica | 9.0 | 3.7 |

| | Pos. | Neg. |
|---|---|---|
| Maximum Impulse Withstand, kV | 150 | 151 |
| 100% Impulse Flashover Level, kV | 162 | 164 |
| Average AC Flashover, kV | 116 | |
| AC Breakdown Strength, kV | 160 | |

| | |
|---|---|
| 100% Modulus | 287 PSI (1.98 MPa) |
| Ult. Tensile | 1343 PSI (9.26 MPa) |
| Ult. Elongation | 529% |
| Die C Tear | 212 PLI (37.1 kN/m) |
| Permanent Set | 23.3% |
| Permittivity | 16.1 |

This example contained mica, an insulating platelet material, and satisfactory results were obtained.

# 0 035 271

Example 4

An elastomeric composition was prepared as per Example 1 using the following components:

|  | Parts by weight |
|---|---|
| Nordel 1470 | 50 |
| Nordel 1440 | 50 |
| Zinc Oxide | 5 |
| Furnex N754 | 61.2 |
| Copper Powder No. 129U, a copper flake available from Atlantic Powdered Metals | 27.8 |
| 4× Mica | 20 |
| Sunpar 2280 | 30 |
| D148 | 2 |
| Struktol WB16 | 2 |
| SR297 | 5 |
| Silane A172 | 1 |
| Vul-Cup 40KE | 13.2 |

|  | % by weight | % by volume |
|---|---|---|
| Carbon Black | 23.7 | 16.0 |
| Copper Flakes | 10.7 | 1.5 |
| Mica | 7.7 | 3.5 |

|  | Pos. | Neg. |
|---|---|---|
| Maximum Impulse Withstand, kV | 206 | 216 |
| 100% Impulse Flashover Level, kV | 218 | 229 |
| Average AC Flashover, kV | 85 | |
| AC Breakdown Strength, kV | 108 | |

| | |
|---|---|
| 100% Modulus | 180 PSI (1.24 MPa) |
| Ult. Tensile | 1268 PSI (8.74 MPa) |
| Ult. Elongation | 684% |
| Die C Tear | 178 PLI (31.2 kN/m) |
| Permanent Set | 27.1% |
| Permittivity | 24.2 |

The above composition utilizes copper in place of aluminum and satisfactory results are obtained.

8

Example 5

An elastomeric composition was prepared as per Example 1 using the following components:

|  | Parts by weight |
|---|---|
| Nordel 1470 | 50 |
| Nordel 1440 | 50 |
| Zinc Oxide | 5 |
| Furnex N754 | 61.2 |
| 5-XD Powder, a leafing aluminum flake from Reynolds Aluminum Pigments | 8.7 |
| 4× Mica | 20 |
| Sunpar 2280 | 30 |
| D148 | 2 |
| Struktol WB16 | 2 |
| SR297 | 5 |
| Silane A172 | 1 |
| Vul-Cup 40KE | 4.4 |

|  | % by weight | % by volume |
|---|---|---|
| Carbon Black | 25.6 | 16.0 |
| Aluminum Flakes | 3.6 | 1.5 |
| Mica | 8.4 | 3.5 |

|  | Pos. | Neg. |
|---|---|---|
| Maximum Impulse Withstand, kV | 202 | 204 |
| 100% Impulse Flashover Level, kV | 219 | 216 |
| Average AC Flashover, kV | 84 | |
| AC Breakdown Strength, kV | 120 | |

| | |
|---|---|
| 100% Modulus | 209 PSI (1.44 MPa) |
| Ult. Tensile | 1196 PSI (8.25 MPa) |
| Ult. Elongation | 737% |
| Die C Tear | 196 PLI (34.3 kN/m) |
| Permanent Set | 24.3% |
| Permittivity | 25.1 |

The above composition meets performance requirements utilizing a leafing-type aluminum platelet.

Example 6

An elastomeric composition was prepared as per Example 1 using the following components:

9

| | Parts by weight |
|---|---|
| Nordel 1470 | 50 |
| Nordel 1440 | 50 |
| Zinc Oxide | 5 |
| Furnex N754 | 61.2 |
| MD 2000, non-leafing aluminum flakes of 45 micrometer average particle diameter (greater than 80 percent through 325 mesh) available from Alcan Ingot Powders | 8.4 |
| 4× Mica | 20 |
| Sunpar 2280 | 30 |
| D148 | 2 |
| Struktol WB16 | 2 |
| SR297 | 5 |
| Silane A172 | 1 |
| Vul-Cup 40KE | 4.4 |

| | % by weight | % by volume |
|---|---|---|
| Carbon Black | 25.6 | 16.0 |
| Aluminum Flakes | 3.5 | 1.5 |
| Mica | 8.4 | 3.5 |

| | Pos. | Neg. |
|---|---|---|
| Maximum Impulse Withstand, kV | 198 | 164 |
| 100% Impulse Flashover Level, kV | 214 | 178 |
| Average AC Flashover, kV | 86 | |
| AC Breakdown Strength, kV | 131 | |

| | |
|---|---|
| 100% Modulus | 207 PSI (1.43 MPa) |
| Ult. Tensile | 1302 PSI (8.98 MPa) |
| Ult. Elongation | 769% |
| Die C Tear | 190 PLI (33.3 kN/m) |
| Permanent Set | 24.7% |
| Permittivity | 20.8 |

The above composition meets requirements utilizing a larger particle size non-leafing aluminum flake.

10

Example 7
An elastomeric material was prepared by processing the following composition:

|  | Parts by weight |
| --- | --- |
| Wacker 101/30, a silicone elastomer available from Wacker | 100 |
| N762 Carbon Black, a coarse grade commercially available from Columbian Chemical | 30 |
| Al 4-501, tradename for aluminum flake commercially available from Reynolds Aluminum Pigments | 6.0 |
| DiCup 40C | 1.4 |

|  | % by weight | % by volume |
| --- | --- | --- |
| Carbon Black | 21.8 | 16.1 |
| Aluminum Flakes | 4.4 | 2.2 |

When this composition was molded into a stress relief tube and formed into a termination by overmolding same with a silicone elastomer insulator, electrical properties were satisfactory.

Example 8
An elastomeric composition was prepared by processing the following composition:

|  | Parts by weight |
| --- | --- |
| Silastic S-2351, tradename for a silicone elastomer available from Dow Corning Corp. | 100 |
| N754 Carbon Black | 32 |
| Al 4-501 | 10.0 |
| Mica | 15.0 |
| DiCup R | 0.4 |

|  | % by weight | % by volume |
| --- | --- | --- |
| Carbon Black | 20.3 | 16.0 |
| Aluminum Flake | 6.4 | 3.4 |
| Mica | 9.5 | 5.0 |

When this composition was tested as per Example 7, similar results were obtained.

**Claims**

1. An elastomeric composition providing electrical stress control and comprising a compounded non-polar elastomer, carbon black, from 0.8 to 7.0 volume per cent of platelet-shaped conductive particles, said composition being characterized in that it contains from 2.5 to 25 volume per cent carbon black, from 0 to 8.0 volume per cent of high-permittivity inorganic filler and from 0 to 12.0 volume per cent of platelet-shaped inorganic dielectric filler.

2. The elastomeric composition of claim 1 wherein said carbon black comprises from about 10 to about 20 volume per cent thereof.

3. The elastomeric composition of claim 1 wherein said carbon black is a coarse furnace grade having an average particle diameter of from about 40 to about 100 nanometers.

11

4. The elastomeric composition of claim 1 wherein said dielectric filler comprises less than about 5 volume per cent thereof.

5. The elastomeric composition of claim 1 wherein said dielectric filler is mica.

6. The elastomeric composition of claim 5 wherein said mica has an average particle diameter of from about 8 to about 40 micrometers and a particle thickness of from about 0.5 to about 1.0 micrometer.

7. The elastomeric composition of claim 1 wherein said compounded elastomer is selected from the group consisting of ethylene-propylene-diene copolymers, ethylene-propylene copolymers, styrene-butadiene rubber, polybutadiene rubber, silicones and natural or synthetic polyisoprenes.

8. The elastomeric composition of claim 1 wherein said conductive particles are aluminum.

9. The elastomeric composition of claim 8 wherein said aluminum particles have an average particle diameter of about 25 micrometers.

10. An elastomeric tubular article for use in the splicing and termination of electric power cables, said article comprising a composition according to any of claims 1 to 9.

11. An elastomeric tubular article according to claim 10 supported in a stretched condition on an easily removable core and containig from about 0.8 to about 3.0 volume per cent of platelet-shaped conductive particles, characterized in that said compounded elastomer is a compounded ethylene-propylene-diene copolymer or a compounded ethylene-propylene copolymer.

12. The article of claim 11 wherein said carbon black is a course furnace grade having an average particle diameter of from about 40 to about 100 nanometers.

13. The article of claim 12 wherein said carbon black comprises from about 10 to about 20 volume per cent thereof.

14. The article of claim 11 wherein said dielectric filler comprises less than about 5 volume per cent thereof.

15. The article of claim 11 wherein said dielectric filler is mica.

16. The article of claim 15 wherein said mica has an average particle diameter of from about 8 to about 40 micrometers and a particle thickness of from about 0.5 to about 1.0 micrometer.

17. The article of claim 11 wherein said conductive particles are aluminum.

18. The article of claim 17 wherein said aluminum particles have an average diameter of about 25 micrometers.

19. The article of claim 11 wherein conductive particles are present at from about 1.2 to about 1.8 volume percent thereof.

20. The article of claim 11 wherein said core is a one-piece rigid spiral core having interconnected adjacent coils in a closed helix configuration.

## Patentansprüche

1. Elastomere Zusammensetzung zur Beeinflussung elektrischer Beanspruchungen mit einem compoundierten nichtpolaren Elastomer, Ruß und 0,8 bis 7,0 Vol% plättchenförmigen leitenden Teilchen, dadurch gekennzeichnet, daß die Zusammensetzung 2,5 bis 25 Vol.% Ruß, 0 bis 8,0 Vol.% anorganischen Füllstoff hoher Permittivität und 0 bis 12,0 Vol.% plättchenförmigen anorganischen dielektrischen Füllstoff enthält.

2. Elastomere Zusammensetzung nach Anspruch 1, dadurch gekennzeichnet, daß ihr Rußgehalt etwa 10 bis etwa 20 Vol.% beträgt.

3. Elastomere Zusammensetzung nach Anspruch 1, dadurch gekennzeichnet, daß der Ruß grober Ofenruß mit einem durchschnittlichen Teilchendurchmesser von etwa 40 bis etwa 100 Nanometer ist.

4. Elastomere Zusammensetzung nach Anspruch 1, dadurch gekennzeichnet, daß ihr Gehalt an dielektrischem Füllstoff weniger als etwa 5 Vol.% beträgt.

5. Elastomere Zusammensetzung nach Anspruch 1, dadurch gekennzeichnet, daß der dielektrische Füllstoff Glimmer ist.

6. Elastomere Zusammensetzung nach Anspruch 5, dadurch gekennzeichnet, daß der Glimmer einen durchschnittlichen Teilchendurchmesser von etwa 8 bis etwa 40 Mikrometer und eine Teilchendicke von etwa 0,5 bis etwa 1,0 Mikrometer besitzt.

7. Elastomere Zusammensetzung nach Anspruch 1, dadurch gekennzeichnet, daß das kompoundierte Elastomere aus der Klasse ausgewählt ist, die aus den Ethylen-Propylen-Dien-Copolymerisaten, den Ethylen-Propylen-Copolymerisaten, Styrol-Butadien-Kautschuk, Polybutadienkautschuk, den Silikonen und den natürlichen und synthetischen Polyisoprenen besteht.

8. Elastomere Zusammensetzung nach Anspruch 1, dadurch gekennzeichnet, daß die leitenden Teilchen aus Aluminium bestehen.

9. Elastomere Zusammensetzung nach Anspruch 8, dadurch gekennzeichnet, daß die Aluminiumteilchen einen durchschnittlichen Teilchendurchmesser von etwa 25 Mikrometer haben.

10. Rohrförmiger elastomerer Gegenstand zur Verwendung beim Spleißen und Abschließen von elektrischen Starkstromkabeln, dadurch gekennzeichnet, daß der Artikel mindestens teilweise aus einer Zusammensetzung nach einem der Ansprüche 1 bis 9 besteht.

11. Rohrförmiger elastomerer Gegenstand nach Anspruch 10, der in gestrecktem Zustand auf einem ihr tragenden, leicht entfernbaren Kern vorgesehen ist und etwa 0,8 bis etwa 3,0 Vol.% plättchenförmige

**0 035 271**

leitende Teilchen enthält, dadurch gekennzeichnet, daß das kompoundierte Elastomer ein kompoundiertes Ethylen-Propylen-Dien-Copolymerisat oder ein kompoundiertes Ethylen-Propylen-Copolymerisat ist.

12. Gegenstand nach Anspruch 11, dadurch gekennzeichnet, daß der Ruß grober Ofenruß mit einem durchschnittlichen Teilchendurchmesser von etwa 40 bis etwa 100 Nanometer ist.

13. Gegenstand nach Anspruch 12, dadurch gekennzeichnet, daß sein Rußgehalt etwa 10 bis 20 Vol.% beträgt.

14. Gegenstand nach Anspruch 11, dadurch gekennzeichnet, daß sein Gehalt an dem dielektrischen Füllstoff weniger als etwa 5 Vol.% beträgt.

15. Gegenstand nach Anspruch 11, dadurch gekennzeichnet, daß der dielektrische Füllstoff Glimmer ist.

16. Gegenstand nach Anspruch 15, dadurch gekennzeichnet, daß der Glimmer einen durchschnittlichen Teilchendurchmesser von etwa 8 bis etwa 40 μm und eine Teilchendicke von etwa 0,5 bis etwa 1,0 μm hat.

17. Gegenstand nach Anspruch 11, dadurch gekennzeichnet, daß die leitenden Teilchen aus Aluminium bestehen.

18. Gegenstand nach Anspruch 17, dadurch gekennzeichnet, daß die Aluminiumteilchen einen durchschnittlichen Durchmesser von etwa 25 μm haben.

19. Gegenstand nach Anspruch 11, dadurch gekennzeichnet, daß er leitende Teilchen in einer Menge von etwa 1,2 bis etwa 1,8 Vol.% enthält.

20. Gegenstand nach Anspruch 11, dadurch gekennzeichnet, daß der Kern eine einteilige starre Spirale mit einander benachbarten, miteinander verbundenen Windungen ist, die die Form einer geschlossenen Wendel haben.

### Revendications

1. Composition élastomère permettant le contrôle de contraintes électriques et comprenant un élastomère non-polaire composé, du noir de carbone, de 0,8 à 7,0 pour cent en volume de particules conductrices en forme de plaquettes, ladite composition étant caractérisée en ce qu'elle contient de 2,5 à 25 pour cent en volume de noir de carbone, de 0 à 8,0 pour cent en volume d'une charge non-organique à constante diélectrique élevée et de 0 à 12,0 pour cent en volume d'une charge diélectrique inorganique sous forme de plaquettes.

2. Composition élastomère suivant la revendication 1, dont la teneur en noir de carbone est d'environ 10 à environ 20 pour cent en volume.

3. Composition élastomère suivant la revendication 1, dans laquelle le noir de carbone est du noir de four non raffiné avec un diamètre moyen des particules compris entre environ 40 à environ 100 nanomètres.

4. Composition élastomère suivant la revendication 1 dont la teneur en charge diélectrique est inférieure à environ 5 pour cent en volume.

5. Composition élastomère suivant la revendication 1, dans laquelle la charge diélectrique est du mica.

6. Composition élastomère suivant la revendication 5, dans laquelle le mica a un diamètre de particules moyen d'environ 8 à environ 40 micromètres et une épaisseur de particules d'environ 0,5 à environ 1,0 micromètre.

7. Composition élastomère suivant la revendication 1, dans laquelle l'élastomère composé précité est choisi dans le groupe comprenant les copolymères éthylène-propylène-diène, les copolymères éthylène-propylène, le caoutchouc au styrène-butadiène, le caoutchouc au polybutadiène, les silicones et les polyisoprènes naturels ou synthétiques.

8. Composition élastomère suivant la revendication 1, dans laquelle les particules conductrices précitées sont constituées par de l'aluminium.

9. Composition élastomère suivant la revendication 8, dans laquelle les particules d'aluminium ont un diamètre particulaire moyen d'environ 25 micromètres.

10. Article tubulaire élastomère utilisable pour l'épissage et la terminaison de câbles d'alimentation électrique, ledit article comprenant une composition suivant l'une quelconque des revendications 1 à 9.

11. Article tubulaire élastomère, suivant la revendication 10, supporté à l'état étiré sur un mandrin facilement amovible et contenant environ 0,8 à environ 3,0 pour cent en volume de particules conductrices en forme de plaquettes, caractérisé en ce que l'élastomère composé est un copolymère composé d'éthylène-propylène-diène ou un copolymère composé d'éthylène-propylène.

12. Article suivant la revendication 11, dans lequel le noir de carbone est du noir de four non raffiné ayant un diamètre particulaire moyen d'environ 40 à environ 100 nanomètres.

13. Article suivant la revendication 12, dont la teneur en noir de carbone est d'environ 10 à environ 20 pour cent en volume.

14. Article suivant la revendication 11, dont la teneur en charge diélectrique est inférieure à environ 5 pour cent en volume.

15. Article suivant la revendication 11, dans lequel le charge diélectrique est constituée par du mica.

16. Article suivant la revendication 15, dans lequel le mica a un diamètre moyen de particules d'environ 8 à environ 40 micromètres et une épaisseur de particules d'environ 0,5 à environ 1,0 micromètre.

13

17. Article suivant la revendication 11, dans lequel les particules conductrices sont constituées par de l'aluminium.

18. Article suivant la revendication 17, dans lequel les particules d'aluminium ont un diamètre moyen d'environ 25 micromètres.

19. Article suivant la revendication 11, dont la teneur en particules conductrices est d'environ 1,2 à environ 1,8 pour cent en volume.

20. Article suivant la revendication 11, dans lequel le mandrin précité est un mandrin spiral rigide d'un seul tenant présentant des spires adjacentes reliées entre elles selon une configuration d'hélice fermée.